# EUROPEAN PATENT APPLICATION

(11) **EP 2 116 431 A1**
(43) Date of publication of application: **11.11.2009**
(21) Application number: 08155782.9
(22) Date of filing: 07.05.2008
(51) Int. Cl.: B60R 21/34

(54) **Hood stop**

(71) Applicant: Ford Global Technologies, LLC, Dearborn, MI 48126 (US)
(72) Inventor: Lindmark, Peter, 422 43 Hisings Backa (SE); Björnrud, Christer, 442 90 Kungälv (SE)
(74) Representative: Bergquist, Kjell Gunnar

(57) **Abstract**

The invention relates to a vehicle hood stop arranged to collapse if the vehicle hood is struck by an object with an impact force exceeding a predetermined limit, which hood stop is provided with an upper section (12) arranged below a lower surface of the hood and a lower section (13) arranged to be attached to the vehicle. The hood stop is provided with at least one impact absorbing means (15, 16, 17; 31, 32, 33; 41; 51, 52, 53), where a first impact absorbing means comprises an intermediate section (14) having at least three collapsible supporting members (15, 16, 17) arranged to diverge from the upper to the lower section.

## Description

### TECHNICAL FIELD

The present invention relates to a hood stop for a vehicle, which hood stop is arranged to collapse if the hood is struck by an object, and a means for attaching the hood stop to the vehicle.

### BACKGROUND ART

In the event of a collision between a pedestrian or a cyclist and a motor vehicle it is desirable to minimize the extent of injuries incurred, in particular in the chest and head area of the person. It is generally well-known to provide a relatively large minimum distance between a front hood and a rigid sub-structure of the vehicle (various engine components, suspension strut mountings, etc.) so that a sufficient deformation distance is available for the front hood, in order to retard the impact of the pedestrian or cyclist in a biomechanically compatible manner.

With some vehicles the necessary minimum distance between a closed front hood and the rigid sub-structure is not available for reasons of packaging, that is, the design of the engine and the hood leaves an insufficient distance between the two components. In such cases, the front hood can be raised actively at least within the rear range, in order to produce the minimum distance, if a collision of the vehicle with a pedestrian or a cyclist is detected. However, such systems are relatively complex and require accurate detection of an impending collision to ensure correct activation of the system.

In addition to providing impact protection, stop buffers are frequently arranged at the front of the hood to define a closing position of the hood. EP 1,488,987 A1 shows an example of a hood stop for a front hood, which functions as conventional stop buffer up to a predefined load. When subjected to a load above the predefined maximum load, as in the case of the impact of a pedestrian or a cyclist on the front hood, the hood stop will undergo plastic deformation in the vertical direction as a supporting first member breaks. The hood stop comprises a deformable second member that absorbs energy during plastic deformation, in order to retard the impact of the pedestrian or cyclist in biomechanically compatible way. A problem with this arrangement is that once the first member has broken or sheared, the hood stop will continue to deform under a relatively low load over the remaining deformation distance. There is no way of controlling the rate at which the second member is deformed once load on the first member has exceeded the maximum load. Under a relatively high load, the impact may not be completely absorbed before the hood reaches the underlying structure.

One object of the invention is it to provide an improved hood stop for a front hood, allowing the rate at which the hood stop is deformed to be controlled. A further object is to provide a hood stop that can be adapted for use in different vehicles by allowing the deformation properties to be modified.

### DISCLOSURE OF INVENTION

The above problems have been solved by a hood stop according to the appended claims.

In the subsequent text, terms such as front, rear, inner and outer are defined in relation to a central longitudinal axis of the vehicle, in its main direction of movement.

According to a preferred embodiment, the invention relates to a vehicle hood stop arranged to collapse if the vehicle hood is struck by an object with an impact force exceeding a predetermined limit. The hood stop is provided with an upper section arranged below a lower surface of the hood and a lower section arranged to be attached to the vehicle. The hood stop is further provided with at least one impact absorbing means, where a first impact absorbing means comprises an intermediate section having at least three collapsible supporting members arranged to diverge from the upper to the lower section.

The supporting members are preferably, but not necessarily arranged with an equidistant spacing about a central axis through the upper and lower sections of the hood stop. Each supporting member may comprise a first portion arranged at a first acute angle and a second portion arranged at a second acute angle, relative to the said central axis through the hood stop. Preferably, the first acute angle is equal to or greater than the second acute angle. If the first acute angle is equal to the second acute angle, the supporting members are provided with a transverse notch or thickness reducing section across an inner surface of each supporting member. In this case, an inner surface is defined as a surface facing the central axis of the hood stop. If the first acute angle is greater than the second acute angle, then the intersection between the first and second portions meet will create a transverse hinge about which the supporting members may be deformed. The said angles may be measured along the outer surfaces of the respective first and second portions of a support member.

Each supporting member may comprise a weakened section with a progressively reduced cross-sectional area. At least one supporting member may be provided with a different reduced cross-sectional area, in order to control the direction of collapse of the hood stop. For instance, if one supporting member is provided with a smaller cross-sectional area, then a sufficiently large downward force on the hood stop will cause this weaker supporting member will deform and/or fracture before the remaining supporting members. In this way the hood stop can be made to collapse in a predetermined direction, for instance, towards a location where there is sufficient space to avoid interference between the collapsed hood stop and the displaced hood.

The reduced cross-sectional area of each weakened section is located between the lower section and the upper section. The minimum cross-sectional area may be located in the central third of the free length of the supporting members, preferably at half the free length. The free length of the supporting members is defined as the distance between the respective upper and lower surfaces where the ends of the supporting members join the lower and upper sections.

In operation, each supporting member is arranged to deform resiliently when the hood stop is subjected to an impact force up to a predetermined limit and to fracture when said predetermined limit is exceeded.

According to one example, the upper, lower and intermediate sections comprise an integral component. The integral component can be injection moulded from a suitable plastic material. One example of a plastic material suitable for this purpose is polypropylene (PP). The upper section is provided with an elastic member arranged to contact the lower surface of a closed hood during normal use. The elastic member may comprise a rubber material with a central attachment means. The central attachment means may be attached in an opening through the upper section. In order to maximize the distance that the hood can be displaced during an impact, the lower section may be provided with an opening into which at least the upper section can be moved. The opening may also be continued to pass through the surface, or vehicle chassis, onto which the hood stop is attached. In this way the upper section and the associated resilient member can be moved completely out of the way to maximize displacement distance.

The hood stop may comprise at least two impact absorbing means, each arranged to deform at different magnitudes of impact force. In this way it is possible to provide a controlled deformation of the hood stop over a predetermined displacement distance. According to a first example, improved control may be provided by a second impact absorbing means in the form of a first spring means arranged in the spaces between adjacent supporting members of the hood stop. The first spring means may comprise a spring unit having the same number of spring portions as supporting members of the hood stop. The spring unit may have a central portion attached to the upper section and a flat spring arranged to extend intermediate the supporting members and to be supported against a cooperating surface or edge adjacent the lower section. Alternatively, the flat springs of the first spring means may be arranged along each inner surface of the supporting members.

According to an alternative first example, the hood stop may comprise a second impact absorbing means and a further impact absorbing means in the form of an additional spring means of the same type as the second impact absorbing means. The first spring means may comprise a spring unit having spring portions arranged intermediate the supporting members, while the additional spring means may be arranged adjacent the supporting members. The second and further spring means are preferably arranged concentrically and are both attached to the upper section. The additional spring means has the same number of spring portions as the first spring means, but has different spring characteristics.

According to a second example, the hood stop may comprise a third impact absorbing means in the form of a second spring means comprising a coil spring attached to the upper or the lower section of the hood stop. The third impact absorbing means can be combined with any of the above examples.

According to a third example, the hood stop may be provided with a second impact absorbing means comprises a second intermediate section. The second intermediate section is arranged inside the first intermediate section and is attached to the upper section. The first and the second intermediate section have an equal number of collapsible supporting members, arranged to be substantially straight or to diverge from the upper towards the lower section. The collapsible supporting members of the second intermediate section are joined at an upper section and may comprise a ring shaped member to be attached to the upper section. According to a preferred example, the second intermediate section and its supporting members is shorter than the first intermediate section. Alternatively, the second impact absorbing means may comprise a pair second intermediate section, having collapsible supporting members of different lengths.

The exact dimensions of a hood stop is determined by its location in relation to the hood and the available deformation distance between the underside of the hood and the chassis. As a rule, the available distance is less adjacent an outer edge of the hood and the assembly making up the hood is often relatively thin in this area. Similarly, the available distance is larger remote from the outer edge of the hood and the hood assembly is relatively thick. Hence, a hood stop located adjacent an outer edge of the hood will be subjected to impact forces immediately after impact, as the edge of the hood only has very limited impact absorbing properties. A hood stop located remote from the outer edge of the hood will be subjected to limited impact forces immediately after the impact. Depending on the impact absorbing properties of the hood assembly, the impact will first deform an impact zone in the hood assembly before acting on the hood stop. In both examples, it is desirable to provide a hood stop that will absorb the impact and if possible reduce the velocity of the impacting object to zero or near zero before it strikes the underlying chassis. Consequently, the length, width and thickness of the supporting members is selected depending on the position of the hood stop and the desired impact absorbing properties in this position.

In addition, each of the at least one impact absorbing means may replaceable and may also be re-combined to form hood stops having predetermined, desired impact absorbing properties. Hence, the characteristics of the hood stop can be adjusted by selecting one or more of the said components or by varying the dimensions and/or characteristics of the individual components. The use of multiple impact absorbing means results in a controlled deformation over the entire displacement distance of the hood stop. In this way the deformation force can be absorbed in several steps as each component comes into operation, which will lower the Head Injury Criteria (HIC) values for the pedestrian or cyclist striking the hood.

According to an alternative embodiment, the lower section may comprise attachment means having first guide means at opposite side edges of said lower section. The first guide means is slidable relative to cooperating second guide means on the vehicle. The side edges or the second guide means may comprise facing or opposing guide means with a general C-, L-or T-shaped cross-section. This allows the entire hood stop to be slid into place and fixed, or to be released and replaced. The attachment means may comprise a locking means arranged to lock the lower section in a predetermined position. A suitable locking means for this purpose may comprise a resilient snap-on connection. The resilient part of the snap-on connection can be attached to a front edge of the lower section, wherein a locking tongue or similar is deflected as the hood stop approaches its end position. The locking tongue will snap into place over a fixed edge provided on the vehicle chassis when the hood stop is in its correct end position. The sliding direction of the hood stop should not coincide with a direction of collapse, as described above.

### BRIEF DESCRIPTION OF DRAWINGS

The invention will be described in detail with reference to the attached figures. It is to be understood that the drawings are designed solely for the purpose of illustration and are not intended as a definition of the limits of the invention, for which reference should be made to the appended claims. It should be further understood that the drawings are not necessarily drawn to scale and that, unless otherwise indicated, they are merely intended to schematically illustrate the structures and procedures described herein.
- Figure 1: shows a schematic illustration of a hood stop according to the invention;
- Figure 2: shows a plan view of the hood stop in Figure 1;
- Figure 3: shows a schematic illustration of two possible embodiments of supporting legs according to the invention;
- Figure 4: shows a partial section through the hood stop of Figure 1;
- Figure 5: shows a first example of a hood stop with a second impact absorbing means;
- Figure 6: shows an example of a second impact absorbing means used in the hood stop of Figure 5;
- Figure 7: shows a second example of a hood stop with a second impact absorbing means;
- Figure 8: shows a third example of a hood stop with a second impact absorbing means; and
- Figure 9: shows a diagram plotting impact force over displaced distance.

### EMBODIMENTS OF THE INVENTION

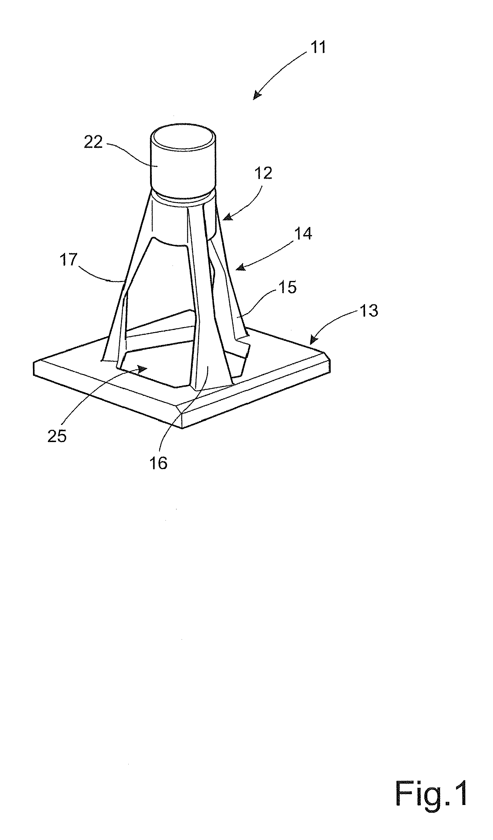

Figure 1 shows a schematic illustration of a hood stop 11 according to the invention. In this example, the hood stop 1 is provided with an upper section 12 arranged below a lower surface of the hood (not shown) and a lower section 13 arranged to be attached to the vehicle. The hood stop 11 is further provided with at least one impact absorbing means, where a first impact absorbing means comprises an intermediate section 14 with three collapsible supporting legs 15, 16, 17 arranged to diverge from the upper section 12 towards the lower section 13.

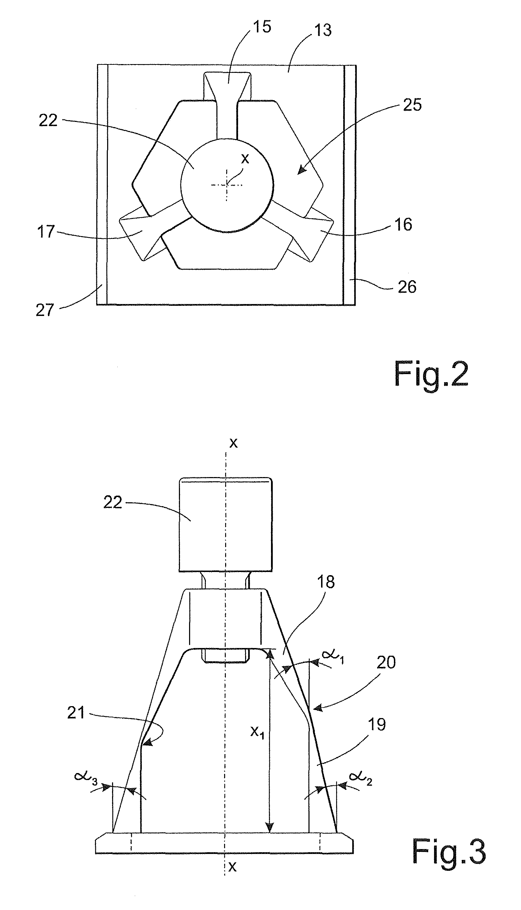

The supporting legs 15, 16, 17 are arranged with an equidistant spacing about a central axis X through the upper and lower sections 12, 13 of the hood stop 11. This is shown in Figure 2, illustrating a plan view of the hood stop. Figure 3 shows a schematic illustration of two embodiments of the supporting legs. As indicated in the right hand side of Figure 3, each supporting leg 15, 16, 17 comprises a first portion 18 arranged at a first acute angle α₁ and a second portion 19 arranged at a second acute angle α₂, relative to the said central axis X through the hood stop. The first acute angle α₁ can be equal to or greater than the second acute angle α₂. If the first acute angle is equal to the second acute angle, both portions 18, 19 of the supporting legs 15, 16, 17 are arranged at a constant third acute angle α₃, as indicated in the left hand side of Figure 3. This embodiment, using a constant angle α₃, corresponds to the embodiment of Figure 1. The said angles are measured along the outer surfaces of the respective first and second portions of a supporting leg. In the described example, an outer surface is defined as a surface facing away from the central axis X of the hood stop 11. If the first acute angle α₁ is greater than the second acute angle α₂, then the intersection between the first and second portions meet provides a weakened section 20 that creates a transverse hinge 20 about which the supporting legs 15, 16, 17 may be deformed.

As indicated in Figures 1 and 3, each supporting leg 15, 16, 17 can comprise a weakened section 21 with a reduced cross-sectional area. The cross-sectional area of each supporting is progressively reduced towards the middle of each leg. The minimum cross-sectional area occurs at the weakened section 21 between the first and second portions 18, 19 and creates a transverse hinge about which the supporting legs 15, 16, 17 may be deformed. The force required to collapse the hood stop can be controlled by selecting a suitable minimum cross-sectional area and/or by selecting suitable angles α₁, α₂, α₃, between the first and second portions 18, 19.

The selection of suitable minimum cross-sectional area and/or suitable angles can also be used to control the direction of collapse of the hood stop. For instance, if one supporting leg is provided with a smaller cross-sectional area than the remaining two legs, then a sufficiently large downward force on the hood stop will cause this weaker supporting member to deform and/or fracture before the remaining supporting legs. Alternatively, one of the supporting legs can be provided with a first and second portions having different angles α₁, α₂ as described above. In this way the hood stop can be made to collapse in a predetermined direction, for instance, towards a location where there is sufficient space to avoid interference between the collapsed hood stop and the displaced hood.

The minimum cross-sectional area of each weakened section is located between the upper section 12 and the lower section 13. The minimum cross-sectional area may be located in the central third of the total free length x₁ of the supporting legs 15, 16, 17, preferably at half the free length x1 as shown in Figure 3. The free length x₁ of the supporting legs 15, 16, 17 is defined as the distance between the respective lower surface of the upper section 12 and the upper surface of the lower section 13, where the respective ends of the supporting legs 15, 16, 17 join the lower and upper sections 12, 13.

In operation, each supporting member is arranged to deform resiliently away from the central axis X when the hood stop is subjected to an impact force up to a predetermined limit. When said predetermined limit is exceeded, the supporting legs will fracture at or adjacent their respective weakened sections 20, 21.

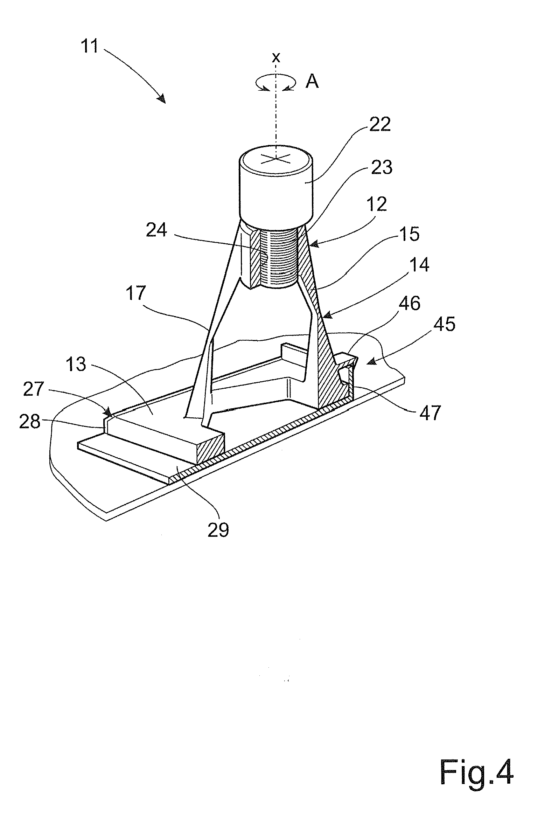

According to one example, the upper, lower and intermediate sections comprise an integral component. The integral component can be injection moulded from a suitable plastic material. An example of a plastic material that may be used for this purpose is polypropylene. The upper section 12 is provided with an elastic member 22 arranged to contact the lower surface of a closed hood during normal use. In the example shown in Figure 4, showing a partial cross-section through the hood stop of Figure 1, the elastic member 22 comprises a rubber material with a central, threaded attachment means 23. The central, threaded attachment means 23 is attached in and rotatably adjustable (see arrow A) relative to a corresponding threaded opening 24 through the upper section. The threaded opening 24 has a pitch angle selected to make the thread self-locking. In this way the vertical position of the elastic member 22 can be adjusted to a suitable height for cooperation with the lower surface of the closed hood.

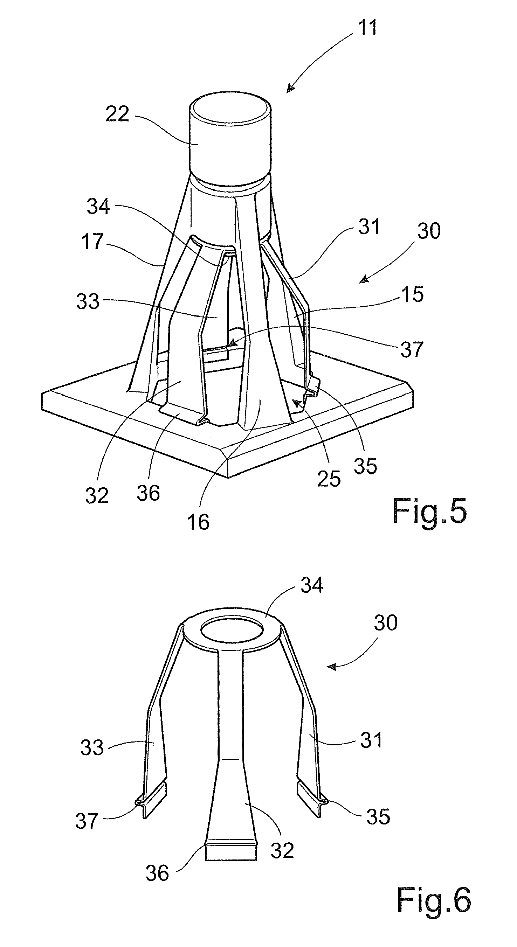

The hood stop as described above can comprise at least two impact absorbing means, each arranged to deform at different magnitudes of impact force. In this way it is possible to provide a controlled deformation of the hood stop over a predetermined displacement distance. Figure 5 shows a first example of a hood stop as shown in Figure 1 provided with a second impact absorbing means. Figure 6 shows an example of such a second impact absorbing means. In this case, improved control is provided by a second impact absorbing means in the form of a first spring means 30 arranged between adjacent supporting legs 15, 16, 17 of the hood stop 11. The spring means 30 has three legs 31, 32, 33 and a central portion 34 attached to the upper section 12. The legs 31, 32, 33 comprise flat springs arranged to extend between the upper and lower sections 12, 13 intermediate the supporting legs 15, 16, 17. The legs 31, 32, 33 of the spring means 30 are provided with a V-shaped projection 35, 36, 37 shaped by bending a lower portion of each leg. The V-shaped projections 35, 36, 37 are supported against a cooperating surface or edge adjacent the opening 25 of the lower section 13.

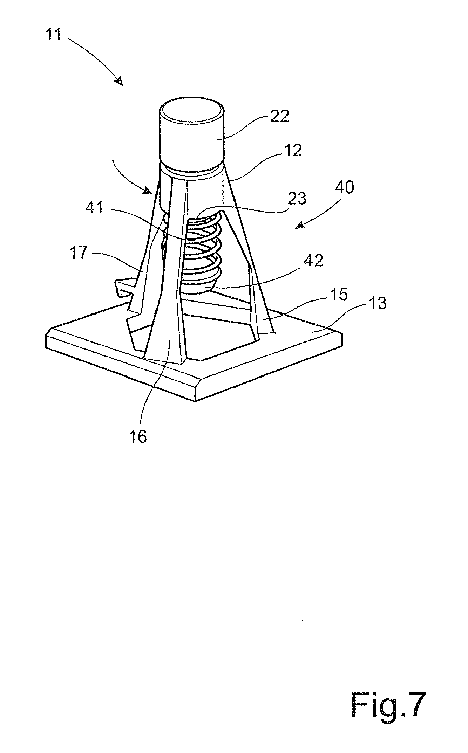

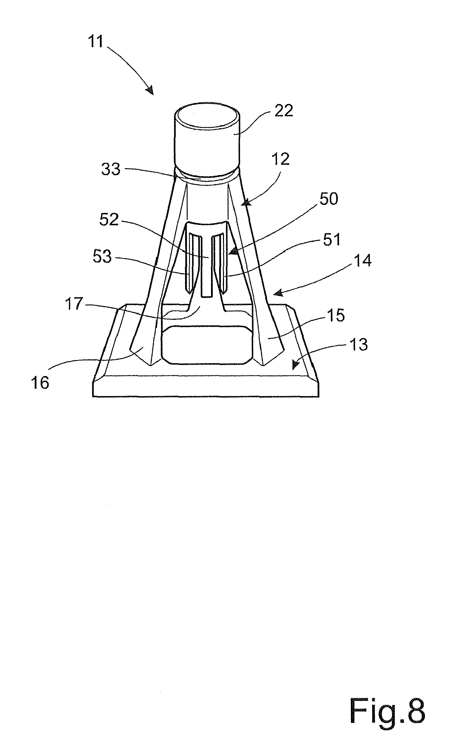

Figure 7 shows a second example of a hood stop as shown in Figure 1 provided with a second impact absorbing means. In this case, the hood stop comprises an impact absorbing means in the form of a spring means 40 comprising a coil spring 41. The upper end of the coil spring 41 is attached to the central, threaded attachment means 23 of the elastic member 22 adjacent the lower surface of the upper section 12 of the hood stop 11. The lower end of the coil spring 41 is provided with an elastic member in the form of a rubber stop 42. The rubber stop 42 is provided to ensure that the coil spring 41 is properly supported by an underlying surface onto which the hood stop 11 is attached. The spring means 40 described in this example can be combined with any one or both of the examples shown in Figures 5 or 8.

Figure 8 shows a third example of a hood stop as shown in Figure 1 provided with a second impact absorbing means. In this case, the hood stop may be provided with a second impact absorbing means comprises a second intermediate section 50 having three substantially vertical second legs 51, 52, 53. The second intermediate section 50 is arranged inside the first intermediate section 14 and is attached to the central, threaded attachment means 23 of the elastic member 22 adjacent the lower surface of the upper section 12. In this example, the first and the second intermediate section 14, 50 have an equal number of collapsible legs 15, 16, 17; 51, 52, 53 arranged to be substantially straight or to diverge from the upper towards the lower section. According to a preferred example, the second intermediate section and its supporting members is shorter than the first intermediate section. In this way, the second legs 51, 52, 53 will come into operating after the supporting legs 15, 16, 17 have collapsed. The impact absorbing properties and the timing of the effect of the second intermediate section 50 can be varied by modifying the cross-sectional area and vertical length of the said legs 51, 52, 53. It is also possible to add a third intermediate section (not shown) comprising a set of third legs with different dimensions and a loner or shorter length than the second legs 51, 52, 53. The second intermediate section 50 described in this example can be combined with any one or both of the examples shown in Figures 5 or 7.

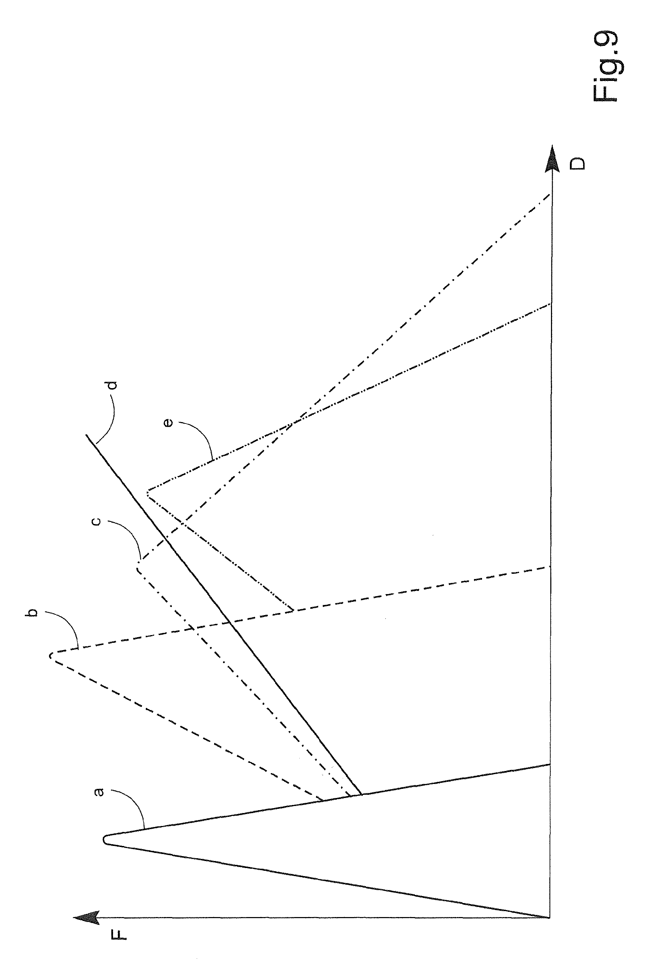

Each of the at least one impact absorbing means may replaceable and may also be re-combined to form hood stops having predetermined, desired impact absorbing properties. The characteristics of the hood stop can be adjusted by selecting one or more of the said component or by varying the dimensions and/or characteristics of the individual components. The use of multiple impact absorbing means results in a controlled deformation over the entire displacement distance of the hood stop. The effect of this is indicated in Figure 9, which shows a diagram plotting impact force F over displaced distance D.

In Figure 9, a first curve a indicates the deformation characteristics of the original hood stop shown in Figure 1. A second curve b indicates the deformation characteristics of the second legs 51, 52, 53 of Figure 8 combined with the original hood stop shown in Figure 1. A third curve c indicates the deformation characteristics of the spring means 40 of Figure 5 combined with the original hood stop shown in Figure 1. A fourth curve d indicates the deformation characteristics of the coil spring 41 of Figure 7 combined with the original hood stop shown in Figure 1. A fifth curve e indicates the deformation characteristics of an assembly comprising a set of third legs in addition to the second legs 51, 52, 53 of Figure 8 combined with the original hood stop shown in Figure 1. The deformation characteristics of this combination will follow the combined curves a, b and e.

By combining the deformation characteristics of two or more of the components described above, the deformation force can be absorbed in several steps as each component comes into operation. The components can be combined so that a subsequent component begins, or has already begun to take up impact forces when a previously activated component has reached its maximum capacity Alternatively a subsequent component can support the absorption of impact forces in combination with a previously activated component. In this context, a component is considered to be activated when it begins to absorb impact forces. The combination of multiple components can be used to assemble a hood stop that is adapted for a particular hood and/or an availably space between the hood and the chassis. This allows for adaptation of a hood stop in order to lower the Head Injury Criteria (HIC) values for the pedestrian or cyclist striking the hood.

In order to maximize the distance that the hood can be displaced during an impact, the lower section 13 can be provided with an opening 25 into which at least the upper section can be moved. The opening 25 can also be continued (not shown) to pass through an attachment plate (see Figure 4), or the vehicle chassis onto which the hood stop 11 is attached. In this way the upper section 12 and any associated resilient members can be moved completely out of the way to maximize displacement distance.

Referring to Figure 4, the lower section 13 comprises attachment means having a pair of first guide means 26, 27 (see Figure 2) at opposite side edges of said lower section 13. The first guide means 26, 27 are slidable relative to cooperating second guide means 28 (only one shown) on an attachment plate 29 on the vehicle. The second guide means 28 comprises facing guide means with an approximate L-shaped cross-section. This allows the entire hood stop 11 to be slid into place during mounting thereof. In order to fix the hood stop in position, the lower section 13 comprises a locking means 45 arranged to lock the lower section 13 in a predetermined position relative to the vehicle. In this example, the locking means 45 comprises a resilient tongue 46 with a bevelled front surface and a substantially vertical locking surface. The resilient tongue 46 is an integral part of a front edge of a lower part of a supporting leg 15.. As the hood stop approaches its end position, the locking tongue 46 is deflected by an upright, substantially vertical fixed edge 47 of the attachment plate 29. The locking tongue 46 will then snap into place over a fixed edge 47 and retain the hood stop 11 in its correct end position. Depending on the height of the fixed edge, the resilient tongue can also be located on the lower section. The sliding direction of the hood stop should not coincide with a desired direction of collapse, as described above.

The invention is not limited to the above examples, but may be varied freely within the scope of the appended claims.

## Claims

1. A vehicle hood stop arranged to collapse if the vehicle hood is struck by an object with an impact force exceeding a predetermined limit, which hood stop is provided with an upper section (12) arranged below a lower surface of the hood and a lower section (13) arranged to be attached to the vehicle, **characterized in that** the hood stop is provided with at least one impact absorbing means (15, 16, 17; 31, 32, 33; 41; 51, 52, 53), where a first impact absorbing means comprises an intermediate section (14) having at least three collapsible supporting members (15, 16, 17) arranged to diverge from the upper to the lower section.

2. Vehicle hood stop according to claim 1, **characterized in that** each supporting member (15, 16, 17) comprises a first portion (18) arranged at a first acute angle (α₁) and a second portion (19) arranged at a second acute angle (α₂), relative to a central axis through the upper and lower sections.

3. Vehicle hood stop according to claim 2, **characterized in that** the first acute angle (α₁) is equal to or greater than the second acute angle (α₂).

4. Vehicle hood stop according to claim 1, **characterized in that** each supporting member (15, 16, 17) comprises a weakened section with a progressively reduced cross-sectional area.

5. Vehicle hood stop according to claim 4, **characterized in that** at least one supporting member is provided with a different reduced cross-sectional area, in order to control the direction of collapse of the hood stop.

6. Vehicle hood stop according to claim 1, **characterized in that** each supporting member is arranged to deform resiliently when the hood stop is subjected to an impact force up to a predetermined limit and to fracture when said predetermined limit is exceeded.

7. Vehicle hood stop according to claim 1, **characterized in that** the upper, lower and intermediate sections (12, 13, 14) comprises an integral component.

8. Vehicle hood stop according to claim 1, **characterized in that** the upper section is provided with an elastic member (22) arranged to contact the lower surface of the hood during normal use.

9. Vehicle hood stop according to claim 1, **characterized in that** the hood stop comprises at least two impact absorbing means (15, 16, 17; 31, 32, 33; 41; 51, 52, 53), each arranged to deform at different magnitudes of impact force, in order to provide a controlled deformation over a predetermined displacement distance.

10. Vehicle hood stop according to claim 9, **characterized in that** a second impact absorbing means in the form of a first spring means (30) arranged intermediate the supporting members (15, 16, 17) of the hood stop and having the same number of spring portions (31, 32, 33) as supporting members of the hood stop.

11. Vehicle hood stop according to claim 9, **characterized in that** a second impact absorbing means in the form of a first spring means arranged adjacent inner surfaces of the supporting members of the hood stop and having the same number of spring portions as supporting members of the hood stop.

12. Vehicle hood stop according to claim 9 or 10, **characterized in that** a third impact absorbing means in the form of a second spring means (40) comprising a coil spring (41) attached to the upper or the lower section (12, 13) of the hood stop.

13. Vehicle hood stop according to claim 9, **characterized in that** at least one second impact absorbing means comprises a second intermediate section (50), arranged inside the first intermediate section (14), and having an equal number of collapsible supporting members (51, 52, 53) arranged to extend parallel from the upper towards the lower section.

14. Vehicle hood stop according to claim 13, **characterized in that** the second intermediate section (50) is shorter than the first intermediate section (14).

15. Vehicle hood stop according to claim 12, **characterized in that** a n additional second impact absorbing means comprises a further intermediate section, arranged inside the first intermediate section (14), which further intermediate section is shorter than the first intermediate section (14) and has a different length than second intermediate section (50).
